Europäisches Patentamt

European Patent Office

Office européen des brevets

(19)

(11) **EP 1 605 578 A1**

(12) **EUROPEAN PATENT APPLICATION**
published in accordance with Art. 158(3) EPC

(43) Date of publication:
**14.12.2005 Bulletin 2005/50**

(51) Int Cl.⁷: $H02N\ 2/14$

(21) Application number: **04714904.2**

(22) Date of filing: **26.02.2004**

(86) International application number:
**PCT/JP2004/002255**

(87) International publication number:
**WO 2004/077651 (10.09.2004 Gazette 2004/37)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **28.02.2003 JP 2003052882**

(71) Applicant: **MATSUSHITA ELECTRIC INDUSTRIAL
CO., LTD.
Kadoma-shi, Osaka 571-8501 (JP)**

(72) Inventors:
• **KISHI, Takafumi
Oota-ku, Tokyo 144-0051 (JP)**
• **SHINTANI, Keiji
Matida-shi, Tokyo 194-0045 (JP)**
• **FUJII, Kiyoshi
Yokohama-shi, Kanagawa 230-0075 (JP)**

(74) Representative: **Hössle Kudlek & Partner
Patentanwälte,
Postfach 10 23 38
70019 Stuttgart (DE)**

(54) **MOTOR CONTROL DEVICE**

(57) A technique for smoothly speed-controlling a speed of a motor whose time constant is relatively small, such as a supersonic motor, under a relatively rough speed control profile and a simple configuration is disclosed. According to this technique, a frequency division number calculating section 1 changes a division number A under the relatively rough speed control profile and sets for a frequency division number setting register 2. The comparator 3 outputs a + count signal if the division number A set by the frequency division number calculating section is greater than a current division number B counted by a frequency division number counter 4 (the division number A > the division number B), and outputs a - count signal if the division number A < the division number B. The frequency division number counter performs a + count on an enable clock of a time width t, which is shorter than the speed control profile of the frequency division number calculating section, if the + count signal is applied from the comparator, and performs a - count if the - count signal is applied from the comparator, and consequently counts the current division number B of a frequency divider 5 and applies this to the frequency divider.

FIG. 1

## Description

TECHNICAL FIELD

The present invention relates to a motor control apparatus for performing an acceleration control and a deceleration control on a motor whose time constant is relatively small, such as a supersonic motor, in accordance with a speed control profile.

BACKGROUND ART

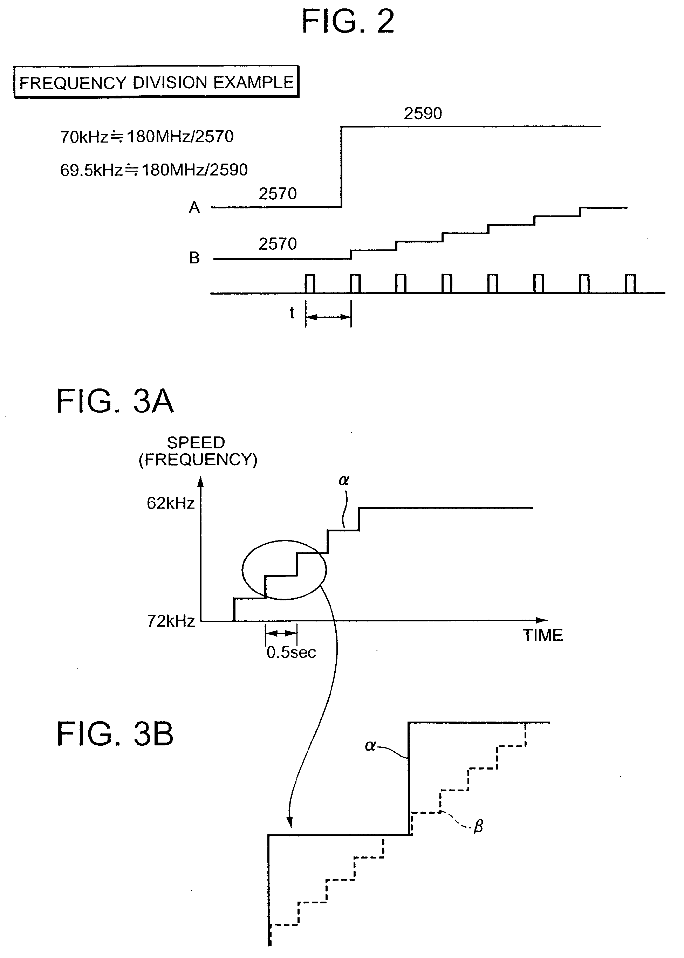

Typically, when a rotation speed of a motor is controlled from a stop state to a final target speed under a constant acceleration, a speed control is carried out in accordance with a speed control profile in which a specification speed is increased in a stepped manner from 0 to the final target speed. Also, a supersonic motor is further decelerated as a drive frequency becomes higher, and further accelerated as the drive frequency becomes lower. Thus, when the rotation speed of the supersonic motor is controlled from the stop state to the final target speed under the constant acceleration, as shown in Fig. 3A, it is controlled in accordance with the speed control profile in which the drive frequency that is the specification speed is decreased in the stepped manner. Here, a waveform $\alpha$ shown in Fig. 3A indicates the speed control profile when the acceleration control is executed such that the drive frequency is decreased by 2kHz for each predetermined time width = 0.5sec by dividing into five stages from a stop drive frequency = 72kHz to a final drive frequency = 62kHz.

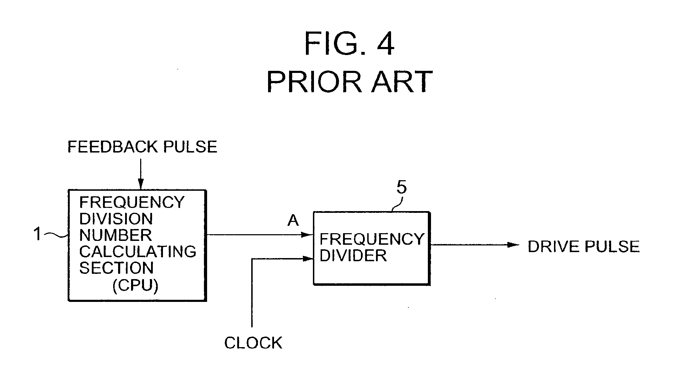

Fig. 4 shows the conventional example of carrying out the control in accordance with the speed control profile shown in Fig. 3A, and this is provided with a frequency division number calculating section 1 and a frequency divider 5. The frequency division number calculating section 1 is constituted by software of CPU and counts the pulses fed back from an encoder installed in the supersonic motor, changes a division number A of the frequency divider 5 in accordance with the speed control profile shown in Fig. 3A, and sets for the frequency divider 5. The frequency divider 5 divides a standard clock at a division ratio = 1/A corresponding to the division number A set by the frequency division number calculating section 1, and applies as a drive pulse to the supersonic motor. Also, as the other conventional examples, they are disclosed in the following patent documents 1, 2 and the like.

Patent Document 1: Japanese Laid Open Patent Application (JP-A-Heisei, 9-261979)
Patent Document 2: Japanese Laid Open Patent Application (JP-A-Heisei, 9-247966)

However, in the case of the motor whose time constant is relatively small such as the supersonic motor, when the control for the acceleration and deceleration is carried out in accordance with the speed control profile of the stepped manner, the actual speed of the motor is not smoothly accelerated and decelerated because it follows the speed control profile of the stepped manner. So, in the motor whose time constant is relatively small, in order to attain the smooth acceleration and deceleration, as indicated in a waveform $\beta$ of Fig. 3B, the speed control profile of the stepped manner needs to be finely set. Thus, when the control is carried out by setting the target speed through the software of the CPU, an expensive speed control system whose processing speed is fast is required. Here, the waveform $\beta$ shown in Fig. 3B indicates the speed control profile when the acceleration control is carried out by dividing the predetermined time width = 0.5sec shown in Fig. 3A for each 0.1sec and decreasing it by 2kHz/5=0.4kHz for each 0.1sec. Also, for example, in the techniques of the patent documents 1, 2, there is a problem that a complex system is required.

DISCLOSURE OF THE INVENTION

The present invention is proposed in view of the above-mentioned problems in the conventional examples and has an object to provide a motor control apparatus, which can smoothly perform a speed control on a speed of a motor whose time constant is relatively small, such as a supersonic motor, under a relatively rough speed control profile and a simple configuration.

In order to attain the above-mentioned object, the present invention is configured so as to have:

dividing means for dividing a standard frequency and generating a drive signal of a motor;
division ratio calculating means for calculating and outputting a division ratio of the dividing means in accordance with a speed control profile of the motor; and
division ratio converting means for converting the division ratio outputted by the division ratio calculating means so as to obtain a speed control profile finer than the speed control profile and setting for the dividing means.

With the above-mentioned configuration, only by adding the division ratio converting means for dividing in accordance with the speed control profile finer than the speed control profile of the division ratio calculating means and setting for the dividing means, it is possible to smoothly speed-control the speed of the motor whose time constant is relatively small, such as the supersonic motor, under the simple configuration, even if the speed control profile of the division ratio calculating means is rough.

Also, the division ratio calculating means calculates and outputs a division number of the dividing means in accordance with the speed control profile, and the division ratio converting means counts up or counts down a clock, which is shorter than a time width of the speed control profile of the division ratio calculating means, on the basis of the division number outputted by the division ratio calculating means, and sets for the dividing means.

Also, the motor is characterized in that it is the supersonic motor.

BRIEF DESCRIPTION OF THE DRAWINGS

Fig. 1 is a block diagram showing an embodiment of a motor control apparatus according to the present invention;
Fig. 2 is an explanation view showing a main signal of the motor control apparatus of Fig. 1;
Fig. 3A is an entire view showing a speed control profile;
Fig. 3B is a partial detailed view showing the speed control profile; and
Fig. 4 is a block diagram showing an embodiment of a conventional motor control apparatus.

BEST MODE FOR CARRYING OUT THE INVENTION

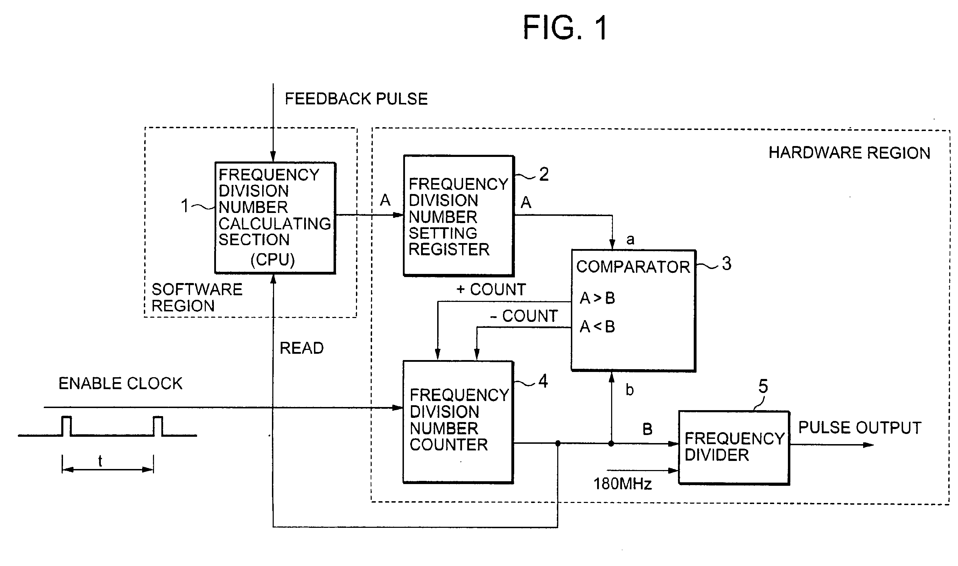

An embodiment of the present invention will be described below with reference to the drawings. Fig. 1 is a block diagram showing the embodiment of a motor control apparatus according to the present invention, and Fig. 2 is an explanation view showing a main signal of the motor control apparatus of Fig. 1.

In Fig. 1, the same reference symbols are given to the same devices as the configuration explained in the conventional example (the frequency division number calculating section 1 and the frequency divider 5). The frequency division number calculating section 1 is constituted by the software of the CPU, and counts the pulses fed back from the encoder installed in the supersonic motor (not shown) and also inputs (reads) a current division number B of the frequency divider 5 counted by a frequency division number counter 4 and consequently converts the division number B into the division number A, in accordance with a relatively rough speed control profile, for example, as shown in Fig. 3A, and then sets for a frequency division number setting register 2. The division number A set for the frequency division number setting register 2 is inputted to an input terminal a of a comparator 3.

The comparator 3 outputs a + count signal if the division number A > the division number B, namely, if the division number A set by the frequency division number calculating section 1 is greater than the current division number B counted by the frequency division number counter 4, and on the other hand, outputs a - count signal if the division number A < the division number B. The frequency division number counter 4 performs a + count (count-up) on an enable clock of a time width t, which is shorter than the relatively rough speed control profile shown in Fig. 3A, if the + count signal is applied from the comparator 3, and performs a - count (count-down) if the - count signal is applied from the comparator 3, and consequently counts the current division number B of the frequency divider 5, and applies this to the frequency divider 5 (and an input terminal b of the comparator 3 and the frequency division number calculating section 1).

Here, the supersonic motor is further accelerated as the drive frequency becomes lower. Thus, when the rotation speed of the supersonic motor is controlled from the stop state to the final target speed under the constant acceleration, it is controlled in accordance with the profile in which the drive frequency becomes lower in the stepped manner. Hence, since the frequency division number calculating section 1 increases the division number A, the comparator 3 outputs the + count signal to the frequency division number counter 4. The frequency division number counter 4 performs the + count on the enable clock and increases the current division number B of the frequency divider 5 for each enable clock. Consequently, the division number B corresponding to the profile finer than the relatively rough profile shown in Fig. 3A is set for the frequency divider 5.

Here, Fig. 2 shows a profile different from the speed profiles shown in Fig. 3A and Fig. 3B. The frequency division number calculating section 1 increases the division number A to 2590 from 2570 of the same value as the division number B, in order to carry out the acceleration by decreasing the drive frequency of the supersonic motor from 70kHz to 69.5kHz. The comparator 3 outputs the + count signal because the division number A > the division number B. The frequency division number counter 4 performs the + count on the enable clock of the time width which is finer than the speed control profile of the division number A, and the division number B of the frequency divider 5 is increased for each count. When a standard frequency of the frequency divider 5 is assumed to be 180MHz, the followings are obtained.

$$70kHz \fallingdotseq 180MHz/2570$$

$$69.5kHz \fallingdotseq 180MHz/2590$$

Thus, on the basis of the time width t of the enable clock and the count unit of the frequency division number counter 4, the drive frequency of the supersonic motor can be speed-controlled finer than the speed control profile of the frequency division number calculating section 1. Hence, the speed of the motor whose time constant is relatively small, such as the supersonic motor, can be smoothly speed-controlled in accordance with the relatively rough speed control profile and the simple configuration.

INDUSTRIAL APPLICABILITY

As mentioned above, according to the present invention, it is possible to provide the motor control apparatus which can smoothly speed-control the speed of the motor whose time constant is relatively small, such as the supersonic motor, under the simple configuration, even if the speed control profile is rough.

**Claims**

1. A motor control apparatus having:

   dividing means for dividing a standard frequency and generating a drive signal of a motor;
   division ratio calculating means for calculating and outputting a division ratio of said dividing means in accordance with a speed control profile of said motor; and
   division ratio converting means for converting the division ratio outputted by said division ratio calculating means so as to obtain a speed control profile finer than said speed control profile and setting for said dividing means.

2. The motor control apparatus according to claim 1, wherein
   said division ratio calculating means calculates and outputs a division number of said dividing means in accordance with said speed control profile, and
   said division ratio converting means counts up or counts down a clock, which is shorter than a time width of said speed control profile of said division ratio calculating means, on the basis of the division number outputted by said division ratio calculating means, and sets for said dividing means.

3. The motor control apparatus according to claim 1 or 2, wherein said motor is a supersonic motor.

# FIG. 1

FEEDBACK PULSE

HARDWARE REGION

1 — FREQUENCY DIVISION NUMBER CALCULATING SECTION (CPU)

A → 2 — FREQUENCY DIVISION NUMBER SETTING REGISTER

A → a — COMPARATOR 3

A > B    + COUNT

A < B    − COUNT

SOFTWARE REGION

READ

ENABLE CLOCK

t

4 — FREQUENCY DIVISION NUMBER COUNTER

b

B

180MHz

5 — FREQUENCY DIVIDER → PULSE OUTPUT

EP 1 605 578 A1

# FIG. 2

FREQUENCY DIVISION EXAMPLE

70kHz ≒ 180MHz/2570

69.5kHz ≒ 180MHz/2590

2590

A    2570

B    2570

t

# FIG. 3A

SPEED
(FREQUENCY)

α

62kHz

72kHz

0.5sec

TIME

# FIG. 3B

α

β

# FIG. 4
# PRIOR ART

FEEDBACK PULSE

1 — FREQUENCY DIVISION NUMBER CALCULATING SECTION (CPU)

A

5

FREQUENCY DIVIDER

DRIVE PULSE

CLOCK

**INTERNATIONAL SEARCH REPORT**

| International application No. |
| --- |
| PCT/JP2004/002255 |

A. CLASSIFICATION OF SUBJECT MATTER
  Int.Cl$^7$ H02N2/14

According to International Patent Classification (IPC) or to both national classification and IPC

B. FIELDS SEARCHED

Minimum documentation searched (classification system followed by classification symbols)
  Int.Cl$^7$ H02N2/00

Documentation searched other than minimum documentation to the extent that such documents are included in the fields searched
  Jitsuyo Shinan Koho        1922–1996   Toroku Jitsuyo Shinan Koho   1994–2004
  Kokai Jitsuyo Shinan Koho   1971–2004   Jitsuyo Shinan Toroku Koho   1996–2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2001-128471 A  (Kabushiki Kaisha Sigma),<br>11 May, 2001 (11.05.01),<br>Full text; all drawings<br>(Family: none) | 1-3 |
| Y | JP 9-148896 A  (Matsushita Electric Works, Ltd.),<br>06 June, 1997 (06.06.97),<br>Full text; all drawings<br>(Family: none) | 1-3 |
| A | JP 9-261979 A  (Kyocera Corp.),<br>03 October, 1997 (03.10.97),<br>Full text; all drawings<br>(Family: none) | 1-3 |

☒  Further documents are listed in the continuation of Box C.　　　☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 March, 2004 (31.03.04) | 13 April, 2004 (13.04.04) |

| Name and mailing address of the ISA/<br>　Japanese Patent Office | Authorized officer |
| --- | --- |
| Facsimile No. | Telephone No. |

Form PCT/ISA/210 (second sheet) (January 2004)

**INTERNATIONAL SEARCH REPORT**

| International application No. |
| --- |
| PCT/JP2004/002255 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 9-247966 A (Kyocera Corp.), 19 September, 1997 (19.09.97), Full text; all drawings (Family: none) | 1-3 |

Form PCT/ISA/210 (continuation of second sheet) (January 2004)